**Europäisches Patentamt**

**European Patent Office**

**Office européen des brevets**

(19)

(11) Publication number : **0 229 599 B1**

# EUROPEAN PATENT SPECIFICATION

(12)

(45) Date of publication of patent specification :
27.09.95 Bulletin 95/39

(51) Int. Cl.⁶ : **G01N 35/08, G01N 35/00**

(21) Application number : **86850367.3**

(22) Date of filing : **22.10.86**

(54) **Sample introduction system for nonsegmented continuous flow analysis.**

(30) Priority : **07.11.85 US 796093**

(43) Date of publication of application :
**22.07.87 Bulletin 87/30**

(45) Publication of the grant of the patent :
**27.09.95 Bulletin 95/39**

(84) Designated Contracting States :
**DE FR GB SE**

(56) References cited :
**DE-A- 3 242 848**
**US-A- 4 315 754**

(73) Proprietor : **BIFOK AB**
**Box 124**
**S-191 22 Sollentuna (SE)**

(72) Inventor : **Ruzicka, Jaromir**
**Attemosevej 26**
**DK-2850 Holte (DK)**
Inventor : **Hansen, Elo Harald**
**Granasen 93**
**DK-2800 Lyngby (DK)**

(74) Representative : **Larsson, Karin et al**
**H. Albihns Patentbyra AB,**
**P.O. Box 3137**
**S-103 62 Stockholm (SE)**

EP 0 229 599 B1

## Description

The successful operation of any flow injection analysis (FIA) system requires injection of a well-defined sample zone into the analyzer channel, where the zone disperses in a controlled manner on its way towards and through the detector to be measured upon (cf US Patents 4 022 575, 4 177 677, 4 224 033, 4 314 824, 4 227 973, 4 315 754 and 4 399 225, 4 399 102 and 4 597 298). The injection devices designed for this purpose so far can be divided into two categories: (a) volume based injection; and (b) time based injection, or a combination thereof. In category (a) the injection is based on the physical entrapment of sample solution into a geometrically well-defined volumetric cavity and subsequent transfer (injection) of the thus formed sample zone into a nonsegmented carrier stream (cf the above-mentioned FIA monograph and US Patents 4 177 677 and 4 224 033). Category (b) is based on aspiration of sample solution at a constant flow rate for a fixed period of time into a well-defined section of a flow-through channel, a volumetric channel, from where the metered sample zone is injected into a nonsegmented carrier stream by a combination of hydrostatic and hydrodynamic forces - the so called hydrodynamic injection procedure (cf US Patent 4 597 298 and DE-A-3 242 848).

DE-A-3 242 848 describes a hydrodynamic sample injection system. It comprises a first confluence point connected to three channels: a sample channel with a sample source and a possible sample pump; a carrier channel with a carrier source and a carrier pump; and a volumetric conduit; and a second confluence point connected to the other end of the volumetric conduit; to an analyzer channel with an analyzer pump; and to a waste channel with a possible waste pump. The sample amount is determined by the volume of the volumetric channel.

Injection systems for gas chromatography are disclosed by Posposil, US-A-4 464 940 for injection of gases. Such systems, however, cannot be used for incompressible liquids.

The purpose of the present invention is to obtain a simplified and improved development of the hydrodynamic injection approach, which is based on the use of a confluence point at which a well-defined sample zone is formed by means of the alternate motion of sample and carrier streams.

The invention concerns a sample flow injection analysis system for nonsegmented continous flow analysis (FIA) comprising pumping devices, three liquid through channels connected at a single confluence point and a detector the three channels connected to the confluence point being a sample inlet channel with an inlet end and a sample source connectable thereto; a carrier channel with a carrier pump and a source for the carrier solution; and an analyzer channel with an aspirating pump and the detector, the carrier pump being in the form of a two-channel pump constituting said carrier pump and a further pump with its one channel being said carrier channel and its other channel being a further channel which is arranged from a branch point in the sample inlet channel to the further pump and from there to a drain.

The invention further concerns a sample flow injection analysis system for nonsegmented continous flow analysis (FIA) comprising pumping devices, a first, a second, and a third liquid-through channel connected at a single confluence point, and a detection device, the first liquid-through channel being a sample inlet channel with a sample source connectable thereto, the second liquid-through channel being an analyzer channel with an aspirating pump and a detector for determination of substances in the sample, said analyzer channel having a branch point between the analyzer and the aspirating pump, connected to a carrier channel with a carrier pump and a source for the carrier solution; and the third liquid-through channel being a branch sample channel connected to a further pump and from there to a drain, the carrier pump and the further pump forming a two-channel pump with its one channel being said carrier channel and its other channel being said branch sample channel.

The invention also concerns a method of injecting a sample at nonsegmented continous flow analysis, using a confluence point connecting three channels, i.e. a sample inlet channel with a movable source for the sample; a carrier channel with a carrier pump having a pumping rate x and a source for the carrier solution; and an analyzer channel with an aspirating pump having a pumping rate y and a detector for determination of substances in the sample, which method is characterized in that the pumping rate x > y and that in a first STEP prior to the injection of the sample, the carrier pump pumps carrier solution to the confluence point, the aspirating pump aspirates part of the carrier solution and the remainder of the carrier solution goes to a waste through the sample inlet channel, in a second STEP the sample source is contacted with the sample inlet channel, the carrier pump is stopped and the aspirating pump aspirates sample through the sample inlet channel past the confluence point and into the analyzer channel in a predetermined amount, and in a third STEP the carrier pump is started again, and the sample amount in the analyzer channel which has passed the confluence point is aspirated into the detector and determined.

The invention further concerns a method of injecting a sample at nonsegmented continous flow analysis, using a confluence point connecting three channels, i.e. a sample inlet channel with a movable source for the sample, an analyzer channel with an aspirating pump having a pumping rate y and a detector for determination of substances in the sample, said analyzer channel having a branch point, between the analyzer and the aspirating pump, connected to a carrier channel with a carrier pump having a pumping rate x and a source for the carrier solution; and a branch sample channel with a further pump having a pumping rate z, the carrier pump and the further pump forming a two-channel pump with its first channel being said carrier channel and its second channel being said branch sample channel, which method is characterized in that the pumping rate z > x > y and that in a first STEP all the pumps are operating with the sample source being either connected or disconnected to the sample inlet channel, the carrier pump pumping carrier solution into the system, the aspirating pump sucking out part of the carrier solution and the further pump sucking the remainder of the carrier solution through the analyser to the confluence point and pumping out a mixture of carrier solution and sample or air, in a second STEP the sample source is connected to the sample inlet channel, the two-channel pump is stopped and the aspirating pump sucks sample inte the sample inlet channel past the confluence point, into the analyzer channel, through the detector, where it is analyzed, and in a third STEP the two-channel pump is started again and the carrier solution is forced through the carrier channel to the branch point, the part of the carrier solution not being suckt out through the aspirating pump passing through the analyzer channel and forcing the sample back through the detector to the confluence point and from there out through the branch sample channel.

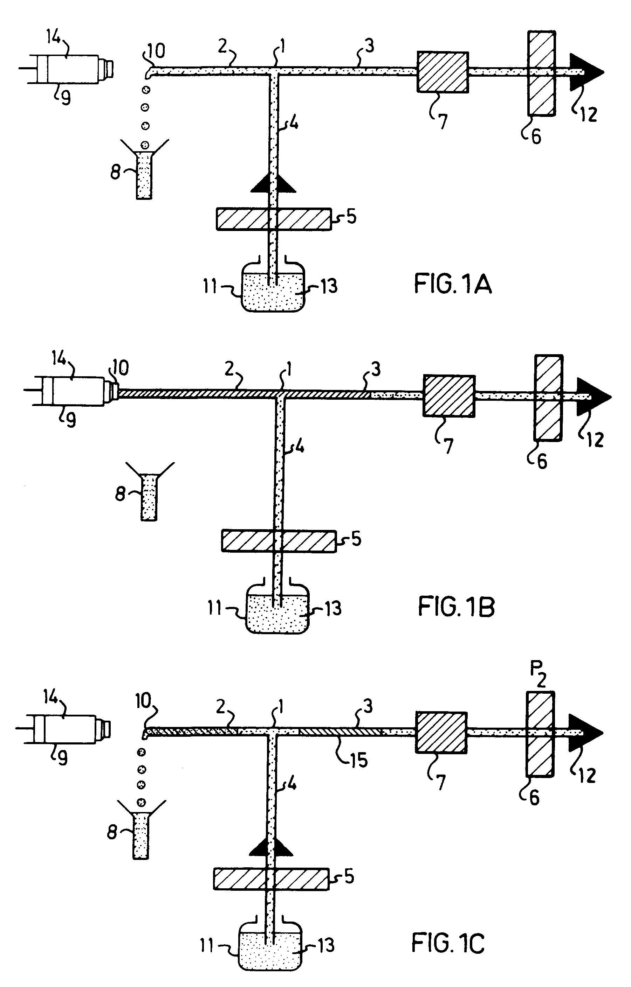

Figs. 1A-C, 2, 3 and 4 show various embodiments of the hydrodynamic injection system according to the invention. The principle is best explained by reference to Figs. 1A, 1B and 1C, where 1 is the confluence point; 2 is the inlet channel; 3 is the analyzer channel; 4 is the carrier stream channel; 5 is the carrier stream pumping device; 6 is the analyzer channel pumping device; 7 is the analyzer situated in the analyzer channel; 8 is the waste receptacle; 9 is the sample source; 10 is the inlet end of the inlet channel; 11 is the reservoir of the carrier stream fluid; 12 is the waste outlet for the analyzer channel; 13 is the carrier solution; 14 is the sample solution; and 15 is the injected sample zone. The operational cycle of the system comprises three sequential steps, each of which is represented in Figs. 1A-C, details being as follows.

STEP 1 (Fig. 1A), i.e. prior to injection of sample solution; Pump P1(5) pumps carrier stream solution 13 towards the confluence point 1 at a higher volumetric pumping rate than pump P2(6) which by its mode of action aspirates the liquid of the analyzer channel 3, that is, pumps away from the confluence point, resulting in a positive outflow of carrier stream solution through the inlet channel 2 and via 10 into waste 8, while sections 3 and 7 concurrently are filled with carrier stream solution flowing towards waste 12.

STEP 2 (Fig. 1B), i.e. sample aspiration: Pump P1(5) is stopped and the column of carrier stream solution 13 in the carrier stream channel 4 is held still, while pump P2 is maintained operating thereby aspirating sample solution 14 from container 9 which now has been moved into contact with inlet end 10.

STEP 3 (Fig 1C), i.e. sample injection: While pumping by P2(6) is maintained, pumping by pump P1(5) is resumed and sample source 9 is withdrawn. Thus, all sample solution 14 to the left of the confluence point 1 is forced in countercurrent fashion from the sample inlet into waste 8, while all sample solution in the form of an injected sample zone 15 to the right of the confluence point 1 is aspirated, followed by carrier stream solution 13, through the analyzer channel 3 and into the analyzer 7 for further treatment and measurement. As both pumps P1 and P2 continue pumping, all sample material is eventually expelled from the system either via the inlet channel 10 or via the Pump P2(6), through the channel 3, the analyzer 7 and the waste outlet 12, and the system is thus reestablished for the next sampling period, being now, in fact, in STEP 1 again.

While the explanation given above describes the principles of the new, proposed mode of injection, it should be noted that variations on this theme are possible. For instance, if a sample is too concentrated to be processed by the analyzer 7, an additional dilution may be executed at the confluence point 1 by decreasing - during the duration of STEP 2 - the pumping rate of the inflowing carrier stream below the aspiration rate of pump P2(6), instead of stopping P1 entirely. Furthermore, if the carrier stream would contain a reagent with which the sample solution should be mixed for the purpose of an intended chemical reaction, which is to be subsequently monitored in the analyzer 7, an effective mixing can thus be obtained during the passage of material through channel 3 to the analyzer 7. The analyzer 7 may be a flow-through detector, or may even comprise a system of channels, detectors, dialyzer, or gas diffusion and pumping units - the only restriction being that the net inflow rate fulfills the conditions stipulated above, i.e. the flow rate through the analyzer 7 is governed solely by the aspiration flow rate of pump P2(6).

It is of interest to mention that the counter-current movement of liquid through channel 2 may be used with advantage if the sampled liquid contains particulate matter which has to be removed prior to automated assay. By placing a filtering device at position 10, particles may be retained on the filter during aspiration of the sample and discarded during the subsequent discharge period (STEP 3).

It is important to emphasize that the repetitive movements of sample solution 14 at the inlet end 10 must be executed in harmony with the countercurrent movement of liquid through channel 2 in such a way that under no circumstances air will enter the analyzer channel 3.

For operation of the injection system in that case where pump P1(5) is stopped during the sampling period (STEP 2), the injected sample volume $S_v$ can be calculated from the stopped time interval T of pump P1(5) and the aspiration rate Q of pump P2(6) and by correcting for the expelled sample liquid contained within the inlet channel 2 of volume $I_v$, i.e.:

$$S_v = (T.Q) - I_v.$$

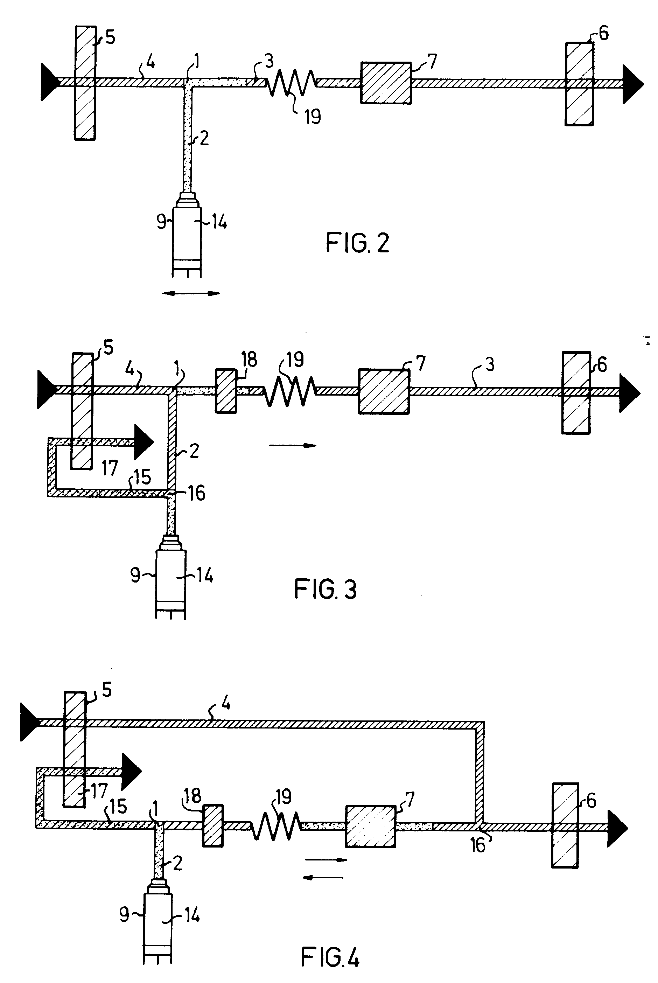

A modified process is illustrated in Fig 2. The same reference numerals have been used for components corresponding to those in Fig 1. In this embodiment the timing of the mechanical connection and disconnection of the sample container to and from the channel 2 must be precise.

The pumping rate for incoming carrier solution is designated x and that for outgoing analyzed sample and carrier solution is designated y, where x is greater than y.

In STEP 1, the system is washed with carrier solution. Both pumps 5 an 6 are in operation and the sample channel 2 is opened freely to the drain.

In STEP 2, the pump 5 is stopped, the sample container 9 is connected and the sample 9 is drawn through the channel 2, and a predetermined quantity is drawn past the point of confluence 1.

In STEP 3, the pump 5 is started, the sample container 9 is disconnected and the carrier solution breaks the sample stream at the confluence point 1 and thus delimits the measured sample quantity which is then sucked through the channel 3 to the analyzer 7. In the channel 2, the remaining sample is forced out and replaced by carrier solution.

In the embodiment shown in Fig 3, the sample 14 need not be disconnected at any specific point in time. At a branch point 16 in the sample channel 2, there is a branch channel 15 which leads to the pump 17 and from there to the drain. The pump for the carrier solution is in the form of a double channel peristaltic pump 5,17. The pump rates for pumps 5, 6 and 17 are x, y and z, wherein z > x > y.

Since peristaltic pumps with a certain pulsation are used here, a filter 18 is placed in the channel 3 to prevent any air or particles from entering the analyzer 7.

In STEP 1, all of the pumps are operating, and the sample container 9 can be connected or disconnected. The pump 5 pumps carrier solution into the system, pump 6 pumps carrier solution and any sample residue out, and pump 17 pumps out a mixture of carrier solution and sample or air.

In STEP 2, the pump 5,17 is stopped, and pump 6 sucks sample into the channel 2 and a certain predetermined quantity of sample past the confluence point 1 in channel 3. The sample container 9 is connected during this step.

In STEP 3, the pump 5,17 is restarted, and pump 5 pumps carrier solution through the channel 4 into channels 3 and 2 forcing the measured sample quantity through the detector 7 where analysis takes place. The pump 17 pumps via branch point 16 and channel 15 out carrier solution from channel 2, and sample solution, if the sample container is still connected, or air, if it has been removed.

Fig 4 shows an embodiment where the sample is sucked into the coil and the analyzer, and after measuring is sucked back the same way. The pump rates are for 5, 6 and 17, x, y and z, respectively, wherein z > x > y.

In STEP 1, all of the pumps are operating, and the sample container can be connected. The channels are rinsed of previous samples by the carrier solution.

In STEP 2, the pump 5,17 is stopped while pump 6 continues to operate. The sample is sucked from the sample container 9 through the channel 2 past the point of confluence 1 through the coil 15 and the analyzer 7 and past the branch point 16.

The time interval for STEP 2 can also be adjusted so that only a portion of the sample passes through the analyzer 7.

In STEP 3, the pump 5,17 starts and carrier solution flows through channel 4 to the branch point 16, and from there a portion is sucked out to the drain by pump 6 while the rest forces the sample back through the analyzer 7 and the coil 19, past the confluence point 1, through the channel 15 and out to the drain. Since the pump rate z is greater than x - y, sample 14, or air if the sample container is removed, will be sucked up via the channel 2, the confluence point 1, and in mixture with the carrier solution through channel 15 and pump 17 to the drain.

The filter in this embodiment can be left out or placed after the coil 19.

Reagent can be added together with the carrier flow or separately through a coupled dozing device.

The advantages of the new injection system may be summarized as follows:

(1) No moving parts in contact with the handled liquids.

(2) Lesser mechanical complexity than in any valving system.

(3) Ideally suited for microminiaturization.

(4) Ideally suited for integration into microconduits, which without any mechanical moving parts are easy to make, inexpensive and disposable.

(5) The sample volume - and the sample dispersion - is adjusted by timing sequences rather than by adjusting the volume of a cavity in a valve, that is, electronic computer control rather than mechanical control of the dispersion is exerted.

(6) Less complex than "classical" hydrodynamic injection - only two pumping tubes are required, and the streams do not have to be balanced.

(7) Countercurrent operation of the inlet part of the system, and/or the detector, allowing clean-up and/or filtration.

## Claims

1. A sample flow injection analysis system for nonsegmented continous flow analysis (FIA) comprising pumping devices (5,6), three liquid through channels connected at a single confluence point and a detector (7) the three channels connected to the confluence point being a sample inlet channel (2) with an inlet end (10) and a sample source (9) connectable thereto; a carrier channel (4) with a carrier pump (5) and a source (11) for the carrier solution (13); and an analyzer channel (3) with an aspirating pump (6) and the detector (7), **characterized in that** the carrier pump is in the form of a two-channel pump (5,17) constituting said carrier pump (5) and a further pump (17) with its one channel being said carrier channel (4) and its other channel being a further channel (15) which is arranged from a branch point (16) in the sample inlet channel (2) to the further pump (17) and from there to a drain.

2. A sample flow injection analysis system according to Claim 1, **characterized in that** the sample source (9) is a container or a continuously flowing stream.

3. A sample flow injection analysis system according to Claim 1, **characterized in** several analyzer channels (3) from the confluence point (1), each with a separate detection device (7).

4. A sample flow injection analysis system for nonsegmented continous flow analysis (FIA) comprising pumping devices, a first, a second-, and a third liquid-through channel connected at a single confluence point, and a detection device, the first liquid-through channel being a sample inlet channel (2) with a sample source (9) connectable thereto, the second liquid-through channel being an analyzer channel (3) with an aspirating pump (6) and a detector (7) for determination of substances in the sample, **characterized in that** said analyzer channel (3) has a branch point (16) between the analyzer (7) and the aspirating pump (6), the branch point being connected to a carrier channel (4) with a carrier pump (5) and a source (11) for the carrier solution (13); and in that the third liquid-through channel is a branch sample channel (15) connected to a further pump (17) and from there to a drain, the carrier pump (5) and the further pump (17) forming a two-channel pump (5, 17) with its one channel being said carrier channel (4) and its other channel being said branch sample channel (15).

5. A sample flow injection analysis system according to anyone of Claims 1-4, **characterized by** a device for dozing reagent to the system for reaction with the sample.

6. A method of injecting a sample at nonsegmented continous flow analysis, using a confluence point (1) connecting three channels, i.e. a sample inlet channel (2) with a movable source (9) for the sample (14); a carrier channel (4) with a carrier pump (5) having a pumping rate x and a source (11) for the carrier solution (13); and an analyzer channel (3) with an aspirating pump (6) having a pumping rate y and a detector (7) for determination of substances in the sample, **characterized in that** the pumping rate x > y and in a first STEP prior to the injection of the sample, the carrier pump (5) pumps carrier solution to the confluence point (1), the aspirating pump (6) aspirates part of the carrier solution and the remainder of the carrier solution goes to a waste (8) through the sample inlet channel (2), in a second STEP the sample source (9) is contacted with the sample inlet channel (2), the carrier pump (5) is stopped and the aspirating pump (6) aspirates sample (14) through the sample inlet channel (2) past the confluence point (1) and into the analyzer channel (3) in a predetermined amount, and in a third STEP the carrier pump (5) is started again, and the sample amount in the analyzer channel (3) which has passed the confluence point (1) is aspirated into the detector (7) and determined.

7. A method according to Claim 6, **characterized in that** in the second step the carrier pump (5) is not stopped completely, but its pumping rate is reduced so that x < y, whereby the sample flowing past the confluence point (1) into the analyzer channel (3) is diluted with carrier.

8. A method according to Claim 6, **characterized in that** the carrier pump (5) is made as a two-channel pump (5,17) constituting said carrier pump (5) and a further pump (17) with its first channel being said carrier channel (4) and its second channel being a further channel (15) which is arranged from a branch point (16) in the sample inlet channel (2) to the further pump (17), said further pump 17 operating at a pumping rate z, where z > x > y, and that in the first STEP all the pumps are operating with the sample source (9) being either connected or disconnected to the sample inlet channel (2), the carrier pump (5) pumping carrier solution into the system, the aspirating pump (6) sucking out carrier solution and the further pump (17) pumping out a mixture of carrier solution and sample or air, in the second STEP the sample source (9) is connected to the sample inlet channel (2), the two-channel pump (5, 17) is stopped and the aspirating pump (6) sucks sample inte the sample inlet channel (2) and a certain predetermined amount of sample is forced past the confluence point (1) and into the analyzer channel (3), and in the third STEP the two-channel pump (5,17) is started again and the carrier solution is forced past the confluence point (1) thus cutting off the predetermined amount of sample from the confluence point and pushing it through the detector (7) where it is analyzed.

9. A method of injecting a sample at nonsegmented continous flow analysis, using a confluence point (1) connecting three channels, i.e. a sample inlet channel (2) with a movable source (9) for the sample (14), an analyzer channel (3) with an aspirating pump (6) having a pumping rate y and a detector (7) for determination of substances in the sample, said analyzer channel (3) having a branch point (16), between the analyzer (7) and the aspirating pump (6), connected to a carrier channel (4) with a carrier pump (5) having a pumping rate x and a source (11) for the carrier solution (13); and a branch sample channel (15) with a further pump (17) having a pumping rate z, the carrier pump (5) and the further pump (17) forming a two-channel pump (5, 17) with its first channel being said carrier channel (4) and its second channel being said branch sample channel (15), **characterized in that** the pumping rate z > x > y and that in a first STEP all the pumps are operating with the sample source (9) being either connected or disconnected to the sample inlet channel (2), the carrier pump (5) pumping carrier solution into the system, the aspirating pump (6) sucking out part of the carrier solution and the further pump (17) sucking the remainder of the carrier solution through the analyser to the confluence point (1) and pumping out a mixture of carrier solution and sample or air, in a second STEP the sample source (9) is connected to the sample inlet channel (2), the two-channel pump (5, 17) is stopped and the aspirating pump (6) sucks sample inte the sample inlet channel (2), past the confluence point (1), into the analyzer channel (3), through the detector (7), where it is analyzed, and in a third STEP the two-channel pump (5,17) is started again and the carrier solution is forced through the carrier channel (4) to the branch point (16), the part of the carrier solution not being sucked out through the aspirating pump (6) passing through the analyzer channel (4) and forcing the sample back through the detector (7) to the confluence point (1) and from there out through the branch sample channel (15).

10. A method according to anyone of Claims 6-9, **characterized in that** reagent is dozed into the system for reaction with the sample.

**Patentansprüche**

1. Strömungs-Einspritz-Analysensystem zur nicht unterteilten, fortlaufenden Strömungsanalyse (FIA) mit Pumpen (5, 6), drei Flüssigkeitsdurchleitungskanälen, die an einem einzigen Zusammenfließpunkt miteinander verbunden sind,und einer Analysierungsvorrichtung (7), wobei die drei, am Zusammenfließpunkt miteinander verbundenen Kanäle ein Probeneinlasskanal (2) mit einem Einlaßende (10) und einer damit verbindbaren Probenquelle (9), ferner ein Trägerstromkanal (4) mit einer Trägerstrompumpe (5) und einer Quelle (11) für die Trägerlösung (13) sowie ein Analysierungskanal (3) mit einer Saugpumpe (6) und einer Analysierungsvorrichtung (7) sind, dadurch **gekennzeichnet**, daß die Trägerstrompumpe die Form einer Zweikanalpumpe (5, 17) hat, die die Trägerpumpe (5) und eine weitere Pumpe (17) darstellt, wobei ihr einer Kanal der Trägerstromkanal (4) ist und wobei ihr anderer Kanal ein weiterer Kanal (15 ) ist, der von einem Abzweigungspunkt (16) im Proben-Einlaßkanal (2) zu der weiteren Pumpe (17) und von hier zu einem Auslaß führt.

2. Probenströmungseinspritz-Analysensystem nach Anspruch 1, dadurch gekennzeichnet, daß die Probenquelle (9) entweder ein Behälter oder ein dauernd fließender Strom ist.

3. Probenströmungseinspritz-Analysensystem nach Anspruch 1, gekennzeichnet durch mehrere Analysierungskanäle (3) vom Zusammenfließpunkt (1) aus, von denen jeder mit einer getrennten Analysierungsvorrichtung (7) versehen ist.

4. Probenströmungseinspritz-Analysensystem für eine nicht unterteilte, fortlaufende Strömungsanalyse (FIA) mit Pumpen, einem ersten, einem zweiten und einem dritten Flüssigkeitsdurchlaßkanal, die an einem einzigen Zusammenfließpunkt miteinander verbunden sind und mit einer Meßvorrichtung, wobei der erste Flüssigkeitsdurchlaßkanal ein Probeneinlaßkanal (2) mit einer damit verbindbaren Probenquelle (9) ist, wobei ferner der zweite, Flüssigkeitsdurchlaßkanal ein Analysierungskanal (3) mit einer Saugpumpe (6) und einem Meßgerät (7) zum Bestimmen der Substanzen in der Probe ist, dadurch **gekennzeichnet**, daß der Analysierungskanal (3) einen Abzweigungspunkt (16) zwischen der Analysierungsvorrichtung (7) und der Saugpumpe (6) hat, wobei der Abzweigungspunkt mit einem Trägerstromkanal (4) und der Trägerstrompumpe (5) sowie mit einer Quelle (11) für die Trägerlösung (13) verbunden ist und

daß der dritte Durchlaßkanal ein abgezweigter Probenkanal (15 ) ist, der mit einer weiteren Pumpe (17) und von dort mit einem Abfluß verbunden ist, wobei die Trägerstrompumpe (5) und die weitere Pumpe (17) eine Zweikanalpumpe (5, 17) bilden, deren einer Kanal der Trägerstromkanal (4) ist und deren anderer Kanal der abgezweigte Probenkanal (15) ist.

5. Probenströmungseinspritz-Analysensystem nach einem der Ansprüche 1 bis 4, gekennzeichnet durch eine Vorrichtung zum dosierten Beimischen eines Reagens zum System zur Reaktion mit der Probe.

6. Verfahren zum Einspritzen einer Probe in eine nicht unterteilte, fortlaufende Strömungsanalyse unter Verwendung eines Zusammenfließpunktes (1), der drei Kanäle miteinander verbindet, und zwar einen Probeneinlaßkanal (2) mit einer beweglichen Quelle (9) für die Probe (14), einen Trägerstromkanal (4) mit einer Trägerstrompumpe (5) mit einer Pumpenleistung (x) und einer Quelle (11) für die Trägerlösung (13) und einen Analysierungskanal (3) mit einer Saugpumpe (6) mit einer Pumpenleistung (y) und einem Meßgerät (7) zum Bestimmen der Substanzen in der Probe,
dadurch **gekennzeichnet**, daß die Pumpenleistung (x) größer ist als (y) und daß in einem ersten SCHRITT vor der Einspritzung der Probe die Trägerstrompumpe (5) Trägerlösung zum Zusammenfließpunkt (1) pumpt, die Saugpumpe (6) einen Teil der Trägerlösung ansaugt und der Rest der Trägerlösung durch den Probeneinlaßkanal (2) in einen Abfallbehälter (8) läuft, in einem zweiten SCHRITT die Probenquelle (9) mit dem Probeneinlaßkanal (2) in Berührung gebracht wird, die Trägerstrompumpe (5) angehalten wird und die Saugpumpe (6) Probenlösung (14) durch den Probeneinlaßkanal (2), am Zusammenfließpunkt (1) vorbei und in einer bestimmten Menge in den Analysierungskanal (3) hineinsaugt und daß in einem dritten SCHRITT die Trägerstrompumpe (5) wieder in Betrieb gesetzt wird und die Probenmenge im Analysierungskanal (3), die den Zusammenfließpunkt (1) passiert hat, in das Meßgerät (7) eingesaugt und bestimmt wird.

7. Verfahren nach Anspruch 6, dadurch gekennzeichnet, daß im zweiten SCHRITT die Trägerstrompumpe (5) nicht vollständig angehalten wird, daß vielmehr ihre Pumpensleistung so vermindert wird, daß x < y, wobei die Probe, die am Zusammenfließpunkt (1) vorbei in den Analysierungskanal (3) strömt, mit Trägerlösung verdünnt wird.

8. Verfahren nach Anspruch 6, dadurch gekennzeichnet, daß die Trägerstrompumpe (5) eine Zweikanalpumpe (5, 17) ist, die die Trägerstrompumpe (5) darstellt und eine weitere Pumpe (17), wobei ihr erster Kanal der Trägerstromkanal (4) ist und wobei ihr zweiter Kanal ein weiterer Kanal (15 ) ist, der vom Abzweigungspunkt (16) im Probeneinlaßkanal (2) zu der weiteren Pumpe (17) führt, wobei diese weitere Pumpe (17) bei einer Pumpenleistung (z) arbeitet, wobei z > x > y, und daß im ersten SCHRITT alle Pumpen im Betrieb sind, wobei die Probenwelle (9) mit dem Probeneinlaßkanal (2) entweder verbunden oder nicht verbunden ist, wobei ferner die Trägerstrompumpe (5) Trägerlösung in das System pumpt, während die Saugpumpe (6) Trägerlösung ansaugt und die weitere Pumpe (17) eine Mischung aus Trägerlösung und Probenlösung oder Luft pumpt, dass im zweiten SCHRITT die Probenquelle (9) mit dem Probeneinlaßkanal (2) verbunden ist und die Zweikanalpumpe (5, 17) angehalten ist und die Saugpumpe (6) Probenlösung in den Probeneinlaßkanal (2) einsaugt, wobei eine bestimmte Probenmenge am Zusammenfließpunkt (1) vorbei und in den Analysierungskanal (3) gedrückt wird, und daß im dritten SCHRITT die Zweikanalpumpe (5, 17) wiederum angelassen und die Trägerlösung am Zusammenfließpunkt (1) vorbeigedrückt wird, so daß die vorbestimmten Probenmenge vom Zusammenfließpunkt abgeschnitten und durch die Meßvorrichtung (7) gedrückt wird, wo sie analysiert wird.

9. Verfahren zum Einspritzen einer Probe bei einer nicht unterteilten, kontinuierlichen Strömungsanalyse unter Verwendung eines Zusammenfließpunktes (1), der drei Kanäle miteinander verbindet, nämlich einen Probeneinlaßkanal (2) mit einer beweglichen Quelle (9) für eine Probe (14), einen Analysierungskanal (3) mit einer Saugpumpe (6) mit einer Saugleistung (y) und einem Meßgerät (7) zur Bestimmung von Substanzen in der Probe, wobei der Analysierungskanal (3) zwischen der Analysierungsvorrichtung (7) und der Saugpumpe (6) einen Abzweigungspunkt (16) hat, der mit dem Trägerstromkanal (4) mit einer Trägerstrompumpe (5) verbunden ist, die eine Pumpenleistung (x) hat sowie eine Quelle (11) für die Trägerlösung (13) und schließlich einen abgezweigten Probenkanal (15 ) mit einer weiteren Pumpe (17) mit einer Pumpenleistung (z), wobei die Trägerstrompumpe (5) und die weitere Pumpe (17) eine Zweikanalpumpe (5, 17) bilden, deren erster Kanal der Trägerstromkanal (4) ist und deren zweiter Kanal der abgezweigte Probenkanal (15 ) ist, dadurch gekennzeichnet, daß die Pumpenleistung z > x > y und daß in einem ersten SCHRITT alle Pumpen im Betrieb sind, wobei die Probenquelle (9) mit dem Probeneinlaßkanal (2) entweder verbunden oder nicht verbunden ist, wobei die Trägerstrompumpe (5) Trägerlösung in das System pumpt, während die Saugpumpe (6) ein Teil der Trägerlösung absaugt und die weitere Pumpe (17) den Rest der Trägerlösung durch die Analysierungsvorrichtung (7) zum Zusammenfließpunkt (1) pumpt und eine Mischung aus Trägerlösung und Probe oder Luft auspumpt, daß in einem zweiten SCHRITT die Probenquelle (9) mit dem Probeneinlaßkanal (2) verbunden wird, die Zweikanalpumpe (5, 17) angehalten wird und daß die Saugpumpe (6) Probenlösung in den Probeneinlaßkanal (2), am Zusammenfließpunkt (1) vorbei in den Analysierungskanal (3) einsaugt, durch das Messgerät (7) hindurch, wo die Probe analysiert wird, und daß in einem dritten SCHRITT die Zweikanalpumpe (5, 17) wiederum angelassen wird und daß die Trägerlösung durch den Trägerstromkanal (4) zum Abzweigungspunkt (16) gedrückt wird, wobei derjenige Teil der Trägerlösung, der nicht durch die Saugpumpe (6) angesaugt worden ist, durch den Analysierungskanal (3) hindurchgeht und die Probe durch das Meßgerät (7) zurück zum Zusammenfließpunkt (1) drückt und von dort durch den abgezweigten Probenkanal (15 ) nach außen.

10. Verfahren nach einem der Ansprüche 6 bis 9, dadurch gekennzeichnet, daß zur Reaktion mit der Probe ein Reagens dosiert in das System eingegeben wird.

**Revendications**

1. Ensemble d'analyse par injection d'un échantillon dans un courant destiné à une analyse à circulation continue non segmentée (FIA), comprenant des dispositifs de pompage (5, 6), trois canaux de circulation de liquide connectés à un confluent unique et un détecteur (7), les trois canaux raccordés au confluent étant un canal d'entrée d'échantillon (2) ayant une extrémité d'entrée (10) et une source d'échantillon (9) qui peut lui être raccordée, un canal (4) d'entraîneur ayant une pompe (5) d'entraîneur et une source (11) de solution formant entraîneur (13), et un canal d'analyseur (3) ayant une pompe aspirante (6) et le détecteur (7), caractérisé en ce que la pompe d'entraîneur est sous forme d'une pompe à deux canaux (5, 17) constituant la pompe (5) d'entraîneur et une pompe supplémentaire (17) dont le premier canal est le canal d'entraîneur (4) et l'autre canal est un canal supplémentaire (15) qui part d'un point de dérivation (16) formé dans le canal (2) d'entrée d'échantillon vers la pompe supplémentaire (17), puis vers une purge.

2. Ensemble d'analyse par injection d'un échantillon dans un courant selon la revendication 1, caractérisé en ce que la source d'échantillon (9) est un récipient ou un courant qui circule de façon continue.

3. Ensemble d'analyse par injection d'un échantillon dans un courant selon la revendication 1, caractérisé en ce plusieurs canaux d'analyseur (3) partent du confluent (1), chacun ayant un dispositif séparé de détection (7).

4. Ensemble d'analyse par injection d'un échantillon dans un courant, destiné à une analyse à circulation continue non segmentée (FIA), comprenant des dispositifs de pompage, un premier, un second et un troisième canal de circulation de liquide, connectés à un confluent unique, et un dispositif de détection, le premier canal de circulation de liquide étant un canal d'entrée d'échantillon (2) auquel peut être raccordée une source d'échantillon (9), le second canal de circulation de liquide étant un canal d'analyseur (3) ayant une pompe aspirante (6) et un détecteur (7) de détermination de substances présentes dans l'échantillon, caractérisé en ce que le canal d'analyseur (3) a un point de dérivation (16) placé entre l'analyseur (7) et la pompe aspirante (6), le point de dérivation étant raccordé à un canal d'entraîneur (4) ayant une pompe d'entraîneur (5) et une source (11) de la solution formant entraîneur (13), et en ce que le troisième canal de circulation de liquide est un canal (15) d'échantillon de dérivation connecté à une pompe supplémentaire (17) puis à une purge, la pompe d'entraîneur (5) et la pompe supplémentaire (17) formant une pompe à deux canaux (5, 17), un premier canal étant le canal d'entraîneur (4) et l'autre canal étant le canal d'échantillon de dérivation (15).

5. Ensemble d'analyse par injection d'un échantillon dans un courant selon l'une quelconque des revendications 1 à 4, caractérisé par un dispositif d'introduction dosée d'un réactif dans l'ensemble afin qu'il réagisse avec l'échantillon.

6. Procédé d'injection d'un échantillon dans une analyse à circulation continue non segmentée, par utilisation d'un confluent (1) de trois canaux qui sont un canal d'entrée d'échantillon (2) ayant une source mobile (9) d'échantillon (14), un canal d'entraîneur (4) ayant une pompe (5) d'entraîneur de débit de pompage x et une source (11) de solution formant entraîneur (13), et un canal d'analyseur (3) ayant une pompe aspirante (6) de débit de pompage y et un détecteur (7) de détermination de substances dans l'échantillon, caractérisé en ce que les débits de pompage sont tels que x > y, et, dans une première ETAPE antérieure à l'injection de l'échantillon, la pompe d'entraîneur (5) pompe la solution formant entraîneur vers le confluent (1), la pompe aspirante (6) aspire une partie de la solution formant entraîneur et le reste de la solution formant entraîneur passe à une évacuation (8) par l'intermédiaire du canal d'entrée d'échantillon (2), dans une seconde ETAPE, la source d'échantillon (9) est mise au contact du canal d'entrée d'échantillon (2), la pompe d'entraîneur (5) est arrêtée et la pompe aspirante (6) aspire l'échantillon (14) dans le canal d'entrée d'échantillon (2) au-delà du confluent (1) et dans le canal d'analyseur (3) en quantité prédéterminée, et, dans une troisième ETAPE, la pompe d'entraîneur (5) est à nouveau mise en fonctionnement, et la quantité d'échantillon présente dans le canal d'analyseur (3) et qui a dépassé le confluent (1) est aspirée dans le détecteur (7) et subit la détermination.

7. Procédé selon la revendication 6, caractérisé en ce que, dans la seconde ETAPE, la pompe d'entraîneur (5) n'est pas totalement arrêtée, mais son débit de pompage est réduit afin que les débits soient tels que x < y, si bien que l'échantillon circulant au niveau du confluent (1) dans le canal d'analyseur (3) est dilué par l'entraîneur.

8. Procédé selon la revendication 6, caractérisé en ce que la pompe d'entraîneur (5) est constituée d'une pompe à deux canaux (5, 17) formant la pompe d'entraîneur (5) et une pompe supplémentaire (17) dont le premier canal est le canal d'entraîneur (4) et le second canal est un canal supplémentaire (15) disposé d'un point de dérivation (16) placé dans le canal d'entrée d'échantillon (2) à la pompe supplémentaire (17), la pompe supplémentaire (17) travaillant avec un débit de pompage z tel que z > x > y, et en ce que, dans la première ETAPE, toutes les pompes travaillent avec la source d'échantillon (9) qui est connectée au canal (2) d'entrée d'échantillon ou déconnectée de celui-ci, la pompe d'entraîneur (5) pompant la solution formant entraîneur dans l'ensemble, la pompe d'aspiration (6) aspirant la solution d'entraîneur et la pompe supplémentaire (17) pompant vers l'extérieur un mélange de la solution formant entraîneur et de l'échantillon ou d'air, dans la seconde ETAPE, la source d'échantillon (9) est connectée au canal d'entrée d'échantillon (2), la pompe à deux canaux (5, 17) est arrêtée et la pompe aspirante (6) aspire un échantillon dans le canal d'entrée d'échantillon (2) et une certaine quantité prédéterminée d'échantillon est chassée au confluent (1) dans le canal d'analyseur (3), et, dans la troisième ETAPE, la pompe à deux canaux (5, 17) est remise en fonctionnement et la solution formant entraîneur est chassée au confluent (1) afin que la quantité prédéterminée d'échantillon provenant du confluent soit interrompue et poussée dans le détecteur (7) dans lequel elle est analysée.

9. Procédé d'injection d'un échantillon dans une analyse à circulation continue non segmentée, par mise en oeuvre d'un confluent (1) de trois canaux, c'est-à-dire un canal d'entrée d'échantillon (2) ayant une source mobile (9) d'échantillon (14), un canal analyseur (3) ayant une pompe aspirante (6) de débit de pompage y et un détecteur (7) de détermination de la présence de substances dans l'échantillon, le canal analyseur (3) ayant un point de dérivation (16) compris entre l'analyseur (7) et la pompe d'aspiration (6) et raccordé à un canal d'entraîneur (4) ayant une pompe d'entraîneur (5) de débit de pompage x et une source (11) de solution formant entraîneur (13), et un canal (15) d'échantillon de dérivation ayant une pompe supplémentaire (17) de débit de pompage z, la pompe d'entraîneur (5) et la pompe supplémentaire (17) formant une pompe à deux canaux (5, 17), son premier canal étant le canal d'entraîneur (4) et son second canal étant le canal d'échantillon de dérivation (15), caractérisé en ce que les débits de pompage sont tels que z > x > y, et en ce que, dans une première ETAPE, toutes les pompes fonctionnent avec la source d'échantillon (9) raccordée au canal d'entrée d'échantillon (2) ou non raccordée, la pompe d'entraîneur (5) pompant la solution formant entraîneur dans l'ensemble, la pompe aspirante (6) aspirant une partie de la solution formant entraîneur et la pompe supplémentaire (17) aspirant le reste de la solution formant entraîneur dans l'analyseur vers le confluent (1) et pompant vers l'extérieur un mélange de solution formant entraîneur et de l'échantillon ou d'air, dans une seconde ETAPE, la source d'échantillon (9) est raccordée au canal d'entrée d'échantillon (2), la pompe à deux canaux (5, 17) est arrêtée et la pompe aspirante (6) aspire l'échantillon dans le canal d'entrée d'échantillon (2) au-delà du confluent (1) dans le canal d'analyseur (3) et dans le détecteur (7) dans lequel il est analysé, et, dans une troisième ETAPE la pompe à deux canaux (5, 17) est remise en fonctionnement et la solution formant entraîneur est chassée dans le canal d'entraîneur (4) vers le point de dérivation (16), la partie de solution formant entraîneur qui n'est pas aspirée par la pompe aspirante (6) circulant dans le canal d'analyseur (3) et rechassant l'échantillon dans le détecteur (7) vers le confluent (1), puis dans le canal d'échantillon de dérivation (15).

10. Procédé selon l'une quelconque des revendications 6 à 9, caractérisé en ce qu'un réactif est introduit de manière dosée dans l'ensemble afin qu'il réagisse avec l'échantillon.

FIG.1A

FIG.1B

FIG.1C

FIG. 2

FIG. 3

FIG. 4